(19) Europäisches Patentamt
European Patent Office
Office européen des brevets

(11) **EP 4 065 829 B1**

(12) **FASCICULE DE BREVET EUROPEEN**

(45) Date de publication et mention
de la délivrance du brevet:
**18.10.2023 Bulletin 2023/42**

(21) Numéro de dépôt: **20807788.3**

(22) Date de dépôt: **20.11.2020**

(51) Classification Internationale des Brevets (IPC):
**F02C 7/045** *(2006.01)* **F02C 7/047** *(2006.01)*

(52) Classification Coopérative des Brevets (CPC):
**F02C 7/047; F02C 7/045;** F05D 2260/202;
F05D 2260/963; Y02T 50/60

(86) Numéro de dépôt international:
**PCT/EP2020/082960**

(87) Numéro de publication internationale:
**WO 2021/105022 (03.06.2021 Gazette 2021/22)**

(54) **ENTRÉE D'AIR ET PROCÉDÉ DE DÉGIVRAGE D'UNE ENTRÉE D'AIR D'UNE NACELLE D'UN TURBORÉACTEUR D'AÉRONEF**

LUFTEINLASS UND VERFAHREN ZUR ENTEISUNG EINES LUFTEINLASSES IN EINE GONDEL EINES FLUGZEUGTRIEBWERKS

AIR INLET AND METHOD FOR DE-ICING AN AIR INLET INTO A NACELLE OF AN AIRCRAFT TURBOJET ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2019 FR 1913301**

(43) Date de publication de la demande:
**05.10.2022 Bulletin 2022/40**

(73) Titulaire: **Safran Nacelles**
**76700 Gonfreville-l'Orcher (FR)**

(72) Inventeur: **HURLIN, Hervé, Léopold**
**77550 MOISSY-CRAMAYEL (FR)**

(74) Mandataire: **Argyma**
**14 Boulevard de Strasbourg**
**31000 Toulouse (FR)**

(56) Documents cités:
**WO-A1-2015/071609 US-A- 3 933 327**
**US-A- 5 841 079**

EP 4 065 829 B1

**Description**

**DOMAINE TECHNIQUE ET OBJET DE L'INVENTION**

La présente invention concerne le domaine des turboréacteurs d'aéronef et vise plus particulièrement un dispositif de dégivrage d'une entrée d'air d'une nacelle d'un turboréacteur d'aéronef.

**ETAT DE LA TECHNIQUE**

De manière connue, un aéronef comporte un ou plusieurs turboréacteurs pour permettre sa propulsion par accélération d'un flux d'air qui circule d'amont en aval dans le turboréacteur.

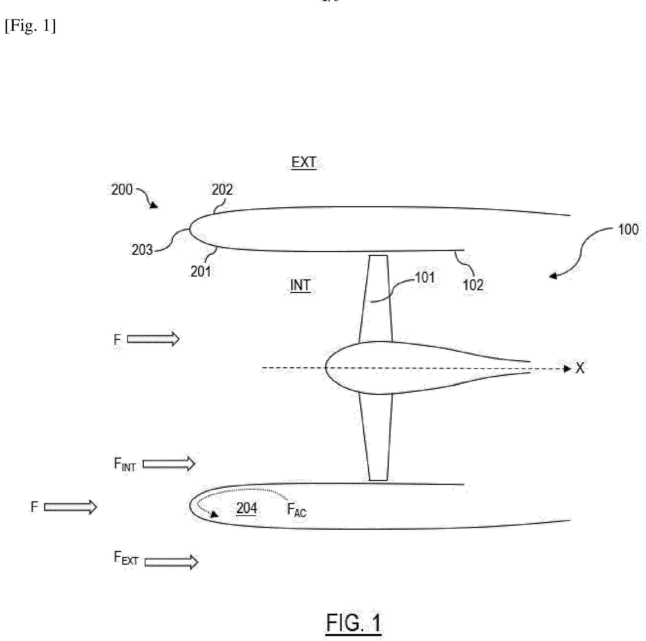

En référence à la [Fig.1], il est représenté un turboréacteur 100 s'étendant selon un axe X et comportant une soufflante 101 montée rotative autour de l'axe X dans une virole extérieure 102 afin d'accélérer un flux d'air F d'amont vers l'aval. Par la suite, les termes amont et aval sont définis par rapport à la circulation du flux d'air F. Le turboréacteur 100 comporte à son extrémité amont une entrée d'air 200 comportant une paroi intérieure 201 tournée vers l'axe X et une paroi extérieure 202 qui est opposée à la paroi intérieure 201, les parois 201, 202 sont reliées par un bord d'attaque 203 également appelé « lèvre de l'entrée d'air ». Ainsi, l'entrée d'air 200 permet de séparer le flux d'air entrant F en un flux d'air intérieur FINT guidé par la paroi intérieure 201 et un flux d'air extérieur FEXT guidé par la paroi extérieure 202. Par la suite, les termes intérieur et extérieur sont définis radialement par rapport à l'axe X du turboréacteur 100.

De manière connue, lors du vol d'un aéronef, du fait des conditions de température et de pression, du givre est susceptible de s'accumuler au niveau du bord d'attaque 203 et de la paroi intérieure 201 de l'entrée d'air 200 et de former des blocs de givre qui sont susceptibles d'être ingérés par le turboréacteur 100. De telles ingestions doivent être évitées afin d'améliorer la durée de vie du turboréacteur 100 et réduire les dysfonctionnements.

Pour éliminer l'accumulation de givre, en référence à la [Fig.1], il est connu de faire circuler un flux d'air chaud FAC dans une cavité intérieure 204 formée entre la paroi intérieure 201 et la paroi extérieure 202 de l'entrée d'air 200. Une telle circulation d'air chaud permet, par conduction thermique, de chauffer la paroi intérieure 201 et ainsi éviter l'accumulation de givre qui fond au fur et à mesure de son accumulation. Une telle circulation d'un flux d'air chaud FAC demeure complexe étant donné que l'entrée d'air 200 peut remplir également une fonction acoustique et peut comporter généralement une structure alvéolaire sur sa paroi intérieure 201. A cet effet, il a été proposé par la demande de brevet FR2912781 et la demande de brevet WO2015/071609 de prévoir des canaux de circulation d'un flux d'air chaud dans la structure alvéolaire. On connait également dans l'art antérieur les demandes de brevet US3933327A et US5841079A.

De manière incidente, on connaît également un dispositif de dégivrage qui comporte des ouvertures traversantes dans la paroi intérieure et extérieure pour éjecter le flux d'air chaud. Une telle solution technique n'est pas retenue étant donné qu'elle consomme une énergie importante car l'air est éjecté ponctuellement et ne réalise qu'un dégivrage imparfait.

On connait également une paroi intérieure d'entrée d'air comportant des ouvertures traversantes, réparties uniformément sur la paroi intérieure, afin de souffler un flux d'air chaud radialement vers l'extérieur de la paroi intérieure, dans la veine d'air du moteur. En pratique, le nombre élevé d'ouvertures traversantes augmente de manière importante la consommation d'air chaud et pénalise le traitement acoustique. Cela est particulièrement problématique pour un turboréacteur à fort taux de dilution qui possède une entrée d'air de grand diamètre. De plus, l'efficacité du soufflage n'est pas optimale étant donné que plusieurs ouvertures traversantes sont alignées parallèlement à l'axe du turboréacteur, ce qui abaisse l'efficacité du chauffage lors de la circulation d'un flux d'air incident d'amont vers l'aval en regard de deux ouvertures traversantes alignées parallèlement à l'axe X du fait des équilibres de pression. La consommation d'air chaud est ainsi élevée. Un des objectifs de la présente invention est d'empêcher toute accumulation de givre tout en permettant un traitement acoustique efficace et économique. Un autre objectif est de limiter de manière optimale la quantité d'air nécessaire au chauffage.

De plus, un autre objectif est de proposer une entrée d'air qui présente les avantages précités tout en étant simple et peu onéreuse à fabriquer.

**PRESENTATION GENERALE DE L'INVENTION**

A cet effet, l'invention concerne une entrée d'air d'une nacelle de turboréacteur d'aéronef comportant un dispositif de dégivrage et s'étendant selon un axe X dans lequel circule un flux d'air d'amont vers l'aval, l'entrée d'air s'étendant de manière annulaire autour de l'axe X et comportant une paroi intérieure tournée vers l'axe X et une paroi extérieure qui est opposée à la paroi intérieure, les parois étant reliées par un bord d'attaque et une cloison interne avant de manière à délimiter une cavité annulaire, le dispositif de dégivrage comportant au moins une source d'air chaud dans la cavité annulaire.

L'invention est remarquable en ce que la paroi intérieure comporte une pluralité de lignes de soufflage, chaque ligne de soufflage comportant une pluralité d'ouvertures traversantes configurées pour souffler des flux élémentaires issus de la source d'air chaud afin de dégivrer ladite paroi intérieure, les lignes de soufflage étant parallèles entre elles dans un plan de projection cylindrique défini par rapport à l'axe X du turboréacteur et à un axe Y définissant la position angulaire par rapport à l'axe X, chaque ligne de soufflage ayant une profondeur P3 définie selon l'axe X et une longueur L3 définie selon l'axe Y dans le plan de projection cylindrique, deux lignes de soufflage adjacentes étant écartées d'une distance D3 selon l'axe Y, chaque position selon l'axe Y comportant au plus une ouverture traversante, le rapport des distances L3/D3 est compris dans l'intervalle [0,8 ; 1[.

Ainsi, contrairement à l'art antérieur qui prévoyait de disposer des ouvertures de soufflage de manière répartie et homogène à la surface de la paroi intérieure, l'invention se propose avantageusement de les organiser en lignes en les espaçant de manière à limiter tout recouvrement ou chevauchement. De plus, le rapport des distances L3/D3 interdit tout recouvrement, ce qui limite le nombre des ouvertures traversantes destinées au soufflage et limite le nombre d'émission de flux d'air chaud. On tire avantage de la diffusion d'un flux élémentaire après son soufflage par une ouverture traversante pour chauffer la paroi située entre deux lignes de soufflante adjacentes. Autrement dit, chaque ligne de courant circulant d'amont en aval sur la paroi intérieure n'entre pas en contact avec au moins une ligne de soufflage mais est chauffée par le flux élémentaire dont la diffusion forme un cône évasé de l'amont vers l'aval. Le nombre d'ouvertures traversantes est réduit de manière importante. Le dégivrage est ainsi plus économique, ce qui est avantageux pour un turboréacteur à fort taux de dilution qui possède une entrée d'air de grand diamètre. Les avantages liés à la diffusion selon un cône évasé sont exploités de manière optimale. De manière avantageuse, deux ouvertures traversantes ne sont pas alignées selon l'axe X.

De manière préférée, chaque ligne de soufflage étant écartée d'un angle d'inclinaison $\theta$ par rapport à l'axe X dans le plan de projection cylindrique, l'angle d'inclinaison est compris entre 20° et 70°. Un tel angle d'inclinaison permet d'assurer un compromis entre efficacité et économie. Plus l'angle d'inclinaison est faible, plus le nombre de lignes de soufflage est important et le dégivrage efficace.

De préférence, la paroi intérieure comprend au moins une zone angulaire libre, formée entre deux lignes de soufflage adjacentes, qui est exempte d'ouvertures traversantes. Une telle zone angulaire libre est avantageusement dégivrée, par effets de bord, par les lignes de soufflages adjacentes qui diffusent des flux élémentaires selon des cônes évasés d'amont vers l'aval du fait de la circulation des lignes de courant.

De manière préférée, chaque ligne de soufflage comporte au moins une ouverture traversante située la plus en amont, dite « ouverture primaire », configurée pour souffler des flux élémentaires issus de la source d'air chaud selon un cône de diffusion dont l'amplitude est plus importante qu'au moins une autre ouverture traversante de la ligne de soufflage, de préférence, de chaque autre ouverture traversante. L'ouverture primaire permet avantageusement, du fait de son positionnement amont, d'être à proximité d'une zone angulaire libre et de permettre de la dégivrer de manière optimale lors de l'émission d'un flux élémentaire selon un cône de diffusion d'amplitude importante. Un tel cône de diffusion permet de couvrir une partie importante de la zone angulaire libre.

De manière préférée, chaque ligne de soufflage comporte au moins 5 ouvertures traversantes, de préférence, au moins 10 ouvertures traversantes, de préférence au moins 15. Un grand nombre d'ouvertures traversantes est optimal pour un turboréacteur. En outre, il permet de définir un rapport des distances L3/D3 qui est pertinent pour un turboréacteur.

De préférence, les ouvertures traversantes d'une même ligne de soufflage sont écartées d'un premier pas Px selon l'axe X. Les ouvertures traversantes, à une même position longitudinale selon l'axe X, sont écartées d'un deuxième pas Py selon l'axe Y selon la relation suivante : Py = Px * $\alpha$ avec $\alpha$ une constante supérieure à 2, de préférence, à 5, de préférence encore, à 10. De tels pas permettent de mettre en avant que les ouvertures traversantes ne sont pas réparties de manière homogène mais organisées selon des lignes.

De préférence, la paroi intérieure comportant au moins une structure d'atténuation acoustique comportant une pluralité d'orifices d'atténuation acoustique, les orifices d'atténuation acoustique sont répartis sur la paroi intérieure en dehors des lignes de soufflage. Ainsi, la paroi intérieure aménage, d'une part, des ouvertures traversantes pour le chauffage et, d'autre part, des orifices pour l'atténuation acoustique. Grâce à l'invention, le nombre d'ouvertures traversantes dédiées au soufflage est avantageusement réduit, ce qui permet de maximiser le nombre d'orifices d'atténuation acoustique et, donc, les performances acoustiques. Les performances acoustiques dans les zones angulaires libres sont optimales.

De manière préférée, la structure alvéolaire définit, d'une part, des cellules acoustiques comportant chacune au moins un orifice d'atténuation acoustique et, d'autre part, des canaux de circulation formant les lignes de soufflage et comportant les ouvertures traversantes de soufflage. Ainsi, les lignes de soufflage se présentent sous la forme de canaux de conduction d'air chaud qui sont percés par des ouvertures traversantes afin de permettre le soufflage. Une ligne de soufflage permet ainsi, même en l'absence d'ouvertures traversantes, de chauffer la paroi intérieure par conduction thermique.

De préférence, chaque ouverture traversante possède une section supérieure à 3mm2 afin de permettre un soufflage efficace. De préférence encore, deux ouvertures traversantes adjacentes d'une ligne de soufflage sont écartées d'une distance définie selon l'axe Y comprise entre 1 à 2,5 fois le diamètre d'une ouverture traversante. Cela permet d'éviter la formation de portions de paroi intérieure non chauffées entre deux ouvertures traversantes consécutives.

De préférence, chaque orifice d'atténuation acoustique possède un diamètre inférieur à 0,5mm afin de permettre une atténuation optimale.

L'invention concerne également une entrée d'air comportant un dispositif de dégivrage tel que présenté précédemment. L'invention concerne également une nacelle comportant une entrée d'air telle que présentée précédemment. L'invention concerne également un turboréacteur comportant une nacelle telle que présentée précédemment.

L'invention concerne en outre un procédé de dégivrage, au moyen d'un dispositif de dégivrage tel que présenté précédemment, d'une entrée d'air d'une nacelle de turboréacteur d'aéronef s'étendant selon un axe X dans lequel circule un flux d'air d'amont vers l'aval, l'entrée d'air s'étendant de manière annulaire autour de l'axe X et comportant une paroi intérieure tournée vers l'axe X et une paroi extérieure qui est opposée à la paroi intérieure, le procédé comportant une étape de soufflage d'une pluralité de flux élémentaires issus de la source d'air chaud par les ouvertures traversantes des lignes de soufflage de manière à dégivrer la paroi intérieure.

**PRESENTATION DES FIGURES**

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :

[Fig.1] est une représentation schématique en coupe longitudinale d'un turboréacteur d'aéronef et d'une entrée d'air selon l'art antérieur,

[Fig.2] est une représentation schématique en coupe longitudinale d'un turboréacteur d'aéronef et d'une entrée d'air selon une forme de réalisation de l'invention,

[Fig.3] est une vue de face d'une entrée d'air selon une forme de réalisation de l'invention,

[Fig.4] est une vue rapprochée de l'entrée d'air de la [Fig.3],

[Fig.5] est une projection cylindrique de la paroi intérieure de l'entrée d'air avec deux lignes de soufflage écartées,

[Fig.6A] est une vue rapprochée des ouvertures traversantes d'une ligne de soufflage de la [Fig.5] et des orifices d'atténuation acoustique,

[Fig.6B] est une vue en coupe radiale par rapport à l'axe X d'une paroi intérieure,

[Fig.7] est une vue en coupe axiale d'une entrée d'air,

[Fig.8] est une vue de face d'une entrée d'air selon une autre forme de réalisation de l'invention comprenant deux ensembles de lignes de soufflage avec des angles d'inclinaison différents, et

[Fig.9] est une vue rapprochée de l'entrée d'air de la [Fig.8].

Il faut noter que les figures exposent l'invention de manière détaillée pour mettre en oeuvre l'invention, lesdites figures pouvant bien entendu servir à mieux définir l'invention le cas échéant.

**DESCRIPTION DETAILLEE D'UNE FORME DE REALISATION DE L'INVENTION**

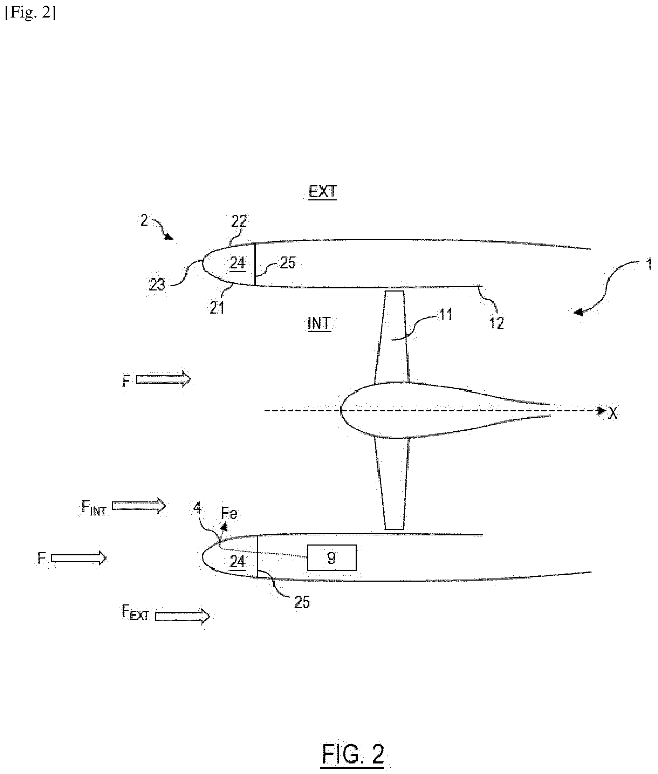

En référence à la [Fig.2], il est représenté un turboréacteur 1 s'étendant selon un axe X et comportant une soufflante 11 montée rotative autour de l'axe X dans une virole extérieure 12 afin d'accélérer un flux d'air F d'amont vers l'aval. Par la suite, les termes amont et aval sont définis par rapport à la circulation du flux d'air F. Le turboréacteur 1 comporte à son extrémité amont une entrée d'air 2 comportant une paroi intérieure 21 tournée vers l'axe X et une paroi extérieure 22 qui est opposée à la paroi intérieure 21, les parois 21, 22 sont reliées par un bord d'attaque 23 connu de l'homme du métier sous la désignation de « lèvre ». L'entrée d'air 2 comporte en outre une cloison interne avant 25 de manière à délimiter une cavité annulaire 24 connue de l'homme du métier sous la désignation anglaise « D-Duct ».

Ainsi, l'entrée d'air 2 permet de séparer le flux d'air entrant F en un flux d'air intérieur $F_{INT}$ guidé par la paroi intérieure 21 et un flux d'air extérieur $F_{EXT}$ guidé par la paroi extérieure 22. Par la suite, les termes intérieur et extérieur sont définis radialement par rapport à l'axe X du turboréacteur 1.

De manière connue, lors du vol d'un aéronef, du fait des conditions de température et de pression, du givre est susceptible de s'accumuler au niveau de la paroi intérieure 21 et du bord d'attaque 23 de l'entrée d'air 2 et de former des blocs de givre qui sont susceptibles d'être ingérés par le turboréacteur 1. De telles ingestions doivent être évitées afin d'améliorer la durée de vie du turboréacteur et réduire les dysfonctionnements.

En référence à la [Fig.2], l'entrée d'air 2 comporte une source d'air chaud 9 montée dans la cavité annulaire 24. La source d'air chaud 9 se présente de manière préférée sous la forme d'une alimentation en air chaud issu du turboréacteur 1, qui peut être un tube piccolo ou une circulation d'un flux d'air circulaire généré par une buse connue sous sa désignation anglaise « swirl », afin de fournir un flux d'air chaud sous pression à une température de l'ordre de 250°C. Une telle source d'air chaud 9 est connue de l'art antérieur et ne sera pas présentée plus en détails.

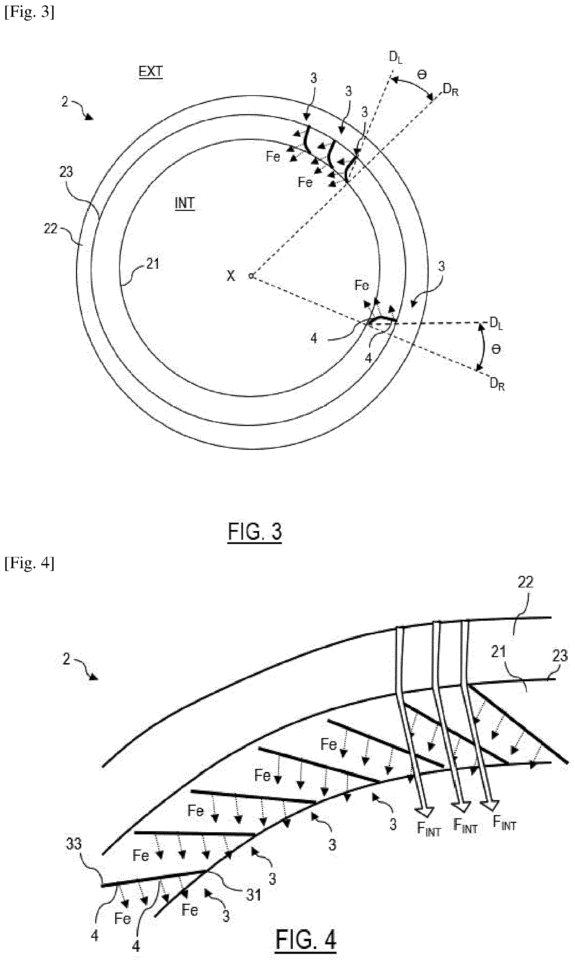

Afin de permettre un dégivrage optimal, comme illustré aux figures 3 à 4, la paroi intérieure 21 comporte une pluralité de lignes de soufflage 3, chaque ligne de soufflage 3 comportant une pluralité d'ouvertures traversantes 4 configurées pour souffler respectivement des flux élémentaires Fe issus de la source d'air chaud 9 afin de dégivrer ladite paroi intérieure 21.

De tels flux élémentaires Fe sont avantageux étant donné qu'ils permettent, d'une part, de décoller par soufflage des particules de givre accumulées directement sur les ouvertures traversantes 4 et, d'autre part, de chauffer la paroi intérieure 21 lors de la circulation du flux élémentaire Fe après son éjection d'une ouverture traversante 4.

En particulier, un flux élémentaire Fe permet de chauffer une portion de la paroi intérieure 21 qui est située en aval de l'ouverture traversante 4 dont il est éjecté. En effet, le flux d'air intérieur $F_{INT}$ circulant dans le turboréacteur 1 entraine chaque flux élémentaire Fe selon une direction axiale X vers l'aval, appelée ligne de courant. Le flux élémentaire Fe permet avantageusement de distribuer des calories à la paroi intérieure 21 au fur et à mesure de sa circulation vers l'aval, ce qui permet d'éviter toute accumulation de givre. Le dégivrage est ainsi global même si les ouvertures traversantes 4 sont peu nombreuses.

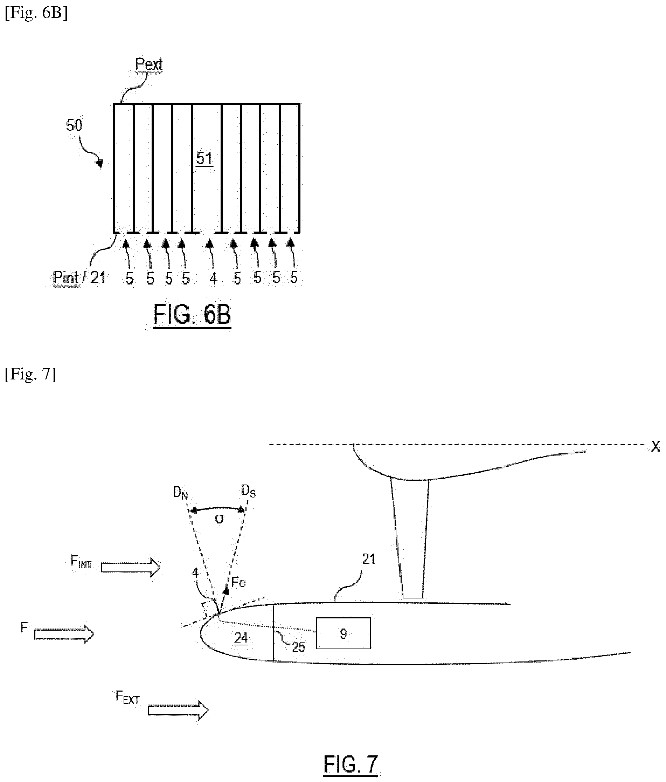

De manière préférée, la paroi intérieure 21 peut comporter, en dehors, des lignes de soufflage 3, des zones de traitement acoustique. Les zones de traitement acoustique comportent, de préférence, une structure alvéolaire de réduction de bruit 50 comme illustré à la [Fig.6B]. De manière connue, la structure alvéolaire 50 présente ainsi une peau intérieure Pint et une peau extérieure Pext, écartées l'une de l'autre, de manière à former des cellules, notamment du type Helmholtz. De manière connue, la peau intérieure Pint de la structure alvéolaire 50 appartient à la paroi intérieure 21 de l'entrée d'air 2.

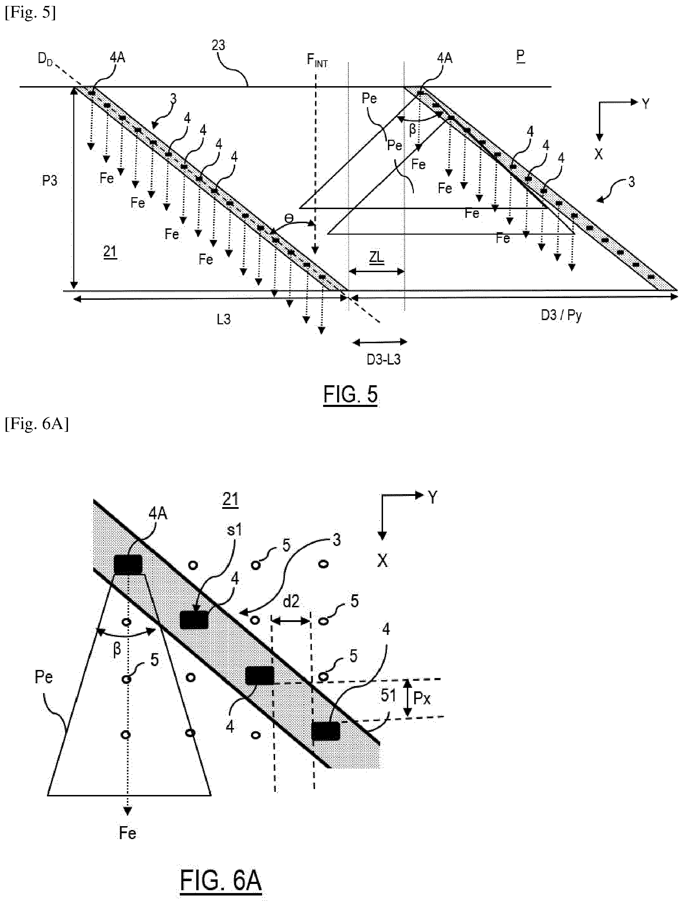

De préférence, la paroi intérieure 21, c'est-à-dire, la peau intérieure Pint de la structure alvéolaire 50, comporte une pluralité d'orifices d'atténuation acoustique 5 permettant l'entrée d'ondes acoustiques dans les cellules de la structure alvéolaire 50 afin de permettre leur atténuation. En référence à la [Fig.6A], il est représenté une paroi intérieure 21 avec des ouvertures traversantes 4 destinées au soufflage et des orifices traversants 5 destinés à l'atténuation acoustique. De manière préférée, comme illustré à la [Fig.6B], les cellules sont borgnes, c'est-à-dire ne comportent qu'un unique orifice 5, afin de permettre une atténuation acoustique optimale. De manière préférée, les lignes de soufflage 3 se présentent sous la forme de canaux 51 formés dans la structure alvéolaire 50 qui permettent de conduire de l'air chaud et de souffler des flux élémentaires Fe via les ouvertures traversantes 4. Ainsi, le dégivrage est réalisé par soufflage mais également par conduction thermique.

Un orifice d'atténuation acoustique 5 possède ainsi une fonction différente d'une ouverture traversante 4 destinée au soufflage. Une telle différence de fonction se traduit en outre par des différences structurelles. Un orifice d'atténuation acoustique 5 possède un diamètre réduit de préférence, inférieure à 0,5mm, par comparaison à une ouverture traversante 4 (présentée par la suite).

De manière préférée, les orifices d'atténuation acoustique 5 sont répartis sur la paroi intérieure 21 en dehors des ouvertures traversantes 4 afin de maximiser les performances de traitement acoustique.

Pour améliorer les performances de dégivrage, il est préférable d'augmenter la dimension et le nombre d'ouvertures traversantes 4. Néanmoins, plus la dimension et le nombre d'ouvertures traversantes 4 sont importants, plus le nombre d'orifices d'atténuation acoustique 5 est faible et plus les performances de traitement acoustique sont réduites. En outre, la consommation d'air chaud augmente également, ce qui pénalise les performances du turboréacteur 1. La réalisation d'ouvertures traversantes 4 résulte ainsi d'un compromis comme cela va être dorénavant présenté.

Comme illustré de manière schématique sur les figures 2 à 4, la paroi intérieure 21 de l'entrée d'air 2 n'est pas cylindrique, c'est-à-dire situé à une même distance radiale de l'axe X, mais incurvée pour des raisons aérodynamiques. Aussi, par souci de clarté et de concision, la paroi intérieure 21 va être présentée dans un plan de projection cylindrique P, c'est-à-dire situé à une même distance radiale de l'axe X, afin de définir les caractéristiques géométriques des lignes de soufflage 3.

En référence à la [Fig.5], le plan de projection cylindrique P est défini dans un repère orthogonal dans lequel l'axe X est l'axe du turboréacteur 1 et l'axe Y correspond à l'ouverture angulaire et varie entre -180° et + 180°.

Selon l'invention, en référence à la [Fig.5], les lignes de soufflage 3 sont parallèles entre elles dans le plan de projection cylindrique P. Chaque ligne de soufflage 3 est écartée d'un angle d'inclinaison Θ par rapport à l'axe X dans le plan de projection cylindrique P, l'angle d'inclinaison Θ étant compris entre 20° et 70°. Ainsi, comme illustré à la [Fig.5], du fait de l'angle d'inclinaison Θ, un flux élémentaire Fe issue d'une ouverture traversante 4 ne circule pas sur une autre ouverture traversante 4 lors de sa circulation vers l'aval selon l'axe X. Cela permet d'éviter avantageusement toute perte d'efficacité due à un recouvrement lié à un soufflage multiple à une même distance radiale par rapport à l'axe X. L'efficacité du chauffage par les flux élémentaires Fe est améliorée étant donné que toutes les portions de la paroi intérieure 21 situées en aval des ouvertures traversantes 4 sont chauffées. Comme cela sera présenté par la suite, même si les ouvertures traversantes 4 sont distinctes les unes des autres, les flux élémentaires Fe permettent de chauffer la paroi intérieure 21 par convection mais également par conduction afin d'éviter toute apparition de givre.

L'angle d'inclinaison Θ résulte d'un compromis entre l'efficacité du dégivrage et l'efficacité de l'atténuation acoustique 4. Un angle d'inclinaison Θ, compris entre 35° et 55°, assure le meilleur compromis.

Par la suite, en référence à la [Fig.5], chaque ligne de soufflage possède une profondeur définie selon l'axe X désignée P3 et une longueur définie selon l'axe Y désignée L3. De manière préférée, la profondeur P3 correspond à la profondeur totale de la paroi intérieure 21 de l'entrée d'air 2. La longueur L3 peut se déduire de la profondeur P3 et de l'angle d'inclinaison Θ par la formule trigonométrique suivante :

$$\cos \Theta = P3/L3$$

De manière préférée, en référence à la [Fig.5], afin de garantir un dégivrage homogène de la paroi intérieure 21, deux lignes de soufflage adjacentes 3 sont écartées d'une même distance d'espacement D3 définie selon l'axe Y.

De manière préférée, chaque ligne de soufflage 3 comporte au moins 5 ouvertures traversantes 4, de préférence, au moins 10 ouvertures traversantes 4, de préférence, au moins 15 ouvertures traversantes 4. Un grand nombre d'ouvertures traversantes 4 permet de définir de manière précise le rapport des distances L3/D3 qui n'est pas pertinent pour un faible nombre d'ouvertures traversantes 4 par ligne, par exemple 2 ou 3.

Un grand nombre d'ouvertures traversantes 4 permet en outre de dégivrer de manière optimale un turboréacteur, en particulier, dont le diamètre de soufflante varie entre 1000mm et 3000mm. De manière préférée, la profondeur P3 varie entre 120mm et 350mm.

Selon l'invention, le rapport des distances L3/D3 est compris dans l'intervalle [0,8 ; 1[, de préférence compris dans l'intervalle [0,9 ; 1[ de préférence encore dans l'intervalle [0,9 ; 0,97], de manière à permettre un dégivrage sensiblement uniforme de l'entrée d'air tout en évitant tout chevauchement des lignes de soufflage 3 selon la direction Y afin d'éviter que des ouvertures traversantes 4 soient alignées selon l'axe X, ce qui pénaliserait les performances de dégivrage.

Comme illustré à la [Fig.5], les lignes de soufflage 3 sont écartées angulairement de manière à éviter tout chevauchement. La paroi intérieure 21 comprend ainsi, entre deux lignes de soufflage adjacentes 3, une zone angulaire libre ZL qui est exempte d'ouvertures traversantes 4. Autrement dit, chaque zone angulaire libre ZL ne remplit pas une fonction de soufflage et peut être dédiée entièrement à l'atténuation acoustique. L'atténuation acoustique est ainsi renforcée. Chaque zone angulaire libre ZL possède une dimension selon l'axe Y égale à D3-L3 et une dimension selon l'axe X égale à P3 comme illustré à la figue 5.

Il est représenté sur la [Fig.5] des lignes de soufflage 3 qui sont rectilignes mais il va de soi qu'elles pourraient être incurvées.

En référence à la [Fig.6A], il est représenté une ligne de soufflage 3 de manière rapprochée. De manière préférée, chaque ligne de soufflage 3 comporte une pluralité d'ouvertures traversantes 4. De préférence, chaque ouverture traversante 4 émet un flux élémentaire Fe d'air chaud qui circule vers l'aval du fait du flux d'air intérieur FINT. En pratique, chaque flux élémentaire Fe permet de chauffer, par convection et conduction, une portion élémentaire Pe de la paroi intérieure en aval de l'ouverture traversante 4 et qui est fonction de la distance par rapport à l'ouverture traversante 4.

Comme illustré à la [Fig.6A], après son soufflage par une ouverture traversante 4, le flux élémentaire FE se diffuse sous la forme d'un cône évasé de l'amont vers l'aval. Une telle diffusion est liée en partie à la circulation des lignes de courant selon l'axe X et peut être optimisée par le dimensionnement des ouvertures traversantes 4 (section, orientation, forme, etc.). De manière préférée, en référence à la [Fig.5], le cône de diffusion possède un angle de diffusion $\beta$ défini selon la formule suivante : $\beta > 2*Arctan(P3/(D3-L3))$. Un tel angle de diffusion $\beta$ permet d'assurer un dégivrage dans les zones libres ZL qui sont dépourvues d'ouvertures traversantes 4. Ainsi, les zones libres ZL sont dégivrées par un soufflage indirect des cônes de diffusion des flux élémentaires Fe, ce qui permet de limiter la consommation d'énergie liée au chauffage.

De manière préférée, chaque ligne de soufflage 3 comporte au moins une ouverture traversante 4 située la plus en amont, dite « ouverture primaire » 4A, configurée pour souffler des flux élémentaires Fe issus de la source d'air chaud 9 selon un cône de diffusion dont l'amplitude est plus importante qu'au moins une autre ouverture traversante 4 de la ligne de soufflage 3, de préférence, de chaque autre ouverture traversante 4. Une ouverture primaire 4A, compte tenu de son positionnement amont, permet de diffuser un flux élémentaire Fe de manière étendue afin de dégivrer la zone angulaire libre ZL de manière optimale, c'est-à-dire, sur une portion élémentaire très étendue.

De manière préférée, chaque ouverture traversante 4 possède une section s1 supérieure à 3mm2 de manière à dégivrer de manière optimale. De manière préférée, la section s1 est comprise entre 3mm2 et 6mm2 de manière à assurer un compromis entre un dégivrage optimal et une limitation de la consommation d'air chaud.

De manière préférée, deux ouvertures traversantes 4 sont écartées d'une même distance d2, de préférence, comprise entre 1 à 2,5 le diamètre d'une ouverture traversante. Une densité d'ouvertures traversantes 4 selon l'axe Y, comprise entre 25% et 50%, assure un compromis entre les performances de dégivrage et d'atténuation acoustique. De manière préférée, la densité d'ouvertures traversantes 4 est sensiblement constante selon la direction Y. Par sensiblement constante, on entend une variation locale de moins de 10% par rapport à la densité moyenne.

En référence à la [Fig.6A], les ouvertures traversantes 4 d'une même ligne de soufflage 3 sont écartées d'un premier pas Px selon l'axe X. Les ouvertures traversantes 4 à une même position longitudinale selon l'axe X, sont écartées d'un deuxième pas Py selon l'axe Y selon la relation suivante : $Py = Px * \alpha$ avec $\alpha$ une constante supérieure à 2, de préférence, à 5, de préférence encore, à 10. Dans cet exemple, le deuxième pas Py correspond à la distance D3.

En effet, comme illustré à la [Fig.5], les ouvertures traversantes 4 sont réparties de manière irrégulière, ce qui s'oppose à l'art antérieur qui visait une répartition régulière et homogène.

En référence dorénavant à la [Fig.7], chaque ouverture traversante 4 comporte un axe d'émission DS qui s'étend sensiblement selon l'axe normal DN à la paroi intérieure 21 dans laquelle est formée localement l'ouverture traversante 4. De manière préférée, l'axe d'émission DS est incliné vers l'aval par rapport à l'axe normal DN d'un angle de soufflage σ. De manière préférée, des meilleures performances de dégivrage sont obtenues avec un angle de soufflage σ compris entre 0° et 30°.

Dans cet exemple de réalisation, il a été représenté de manière schématique des ouvertures traversantes 4 de forme rectangulaire mais il va de soi que d'autres formes pourraient convenir, notamment, des fentes, des ouvertures circulaires ou toute autre ouverture calibrée.

Comme expliqué précédemment, chaque ouverture traversante 4 possède une section de passage supérieure ou égale à 3 mm$^2$ de manière à fournir un flux élémentaire Fe efficace. Une telle ouverture traversante 4 se distingue de manière avantageuse d'un orifice d'atténuation acoustique 5, dont le diamètre est inférieur à 0.5 mm.

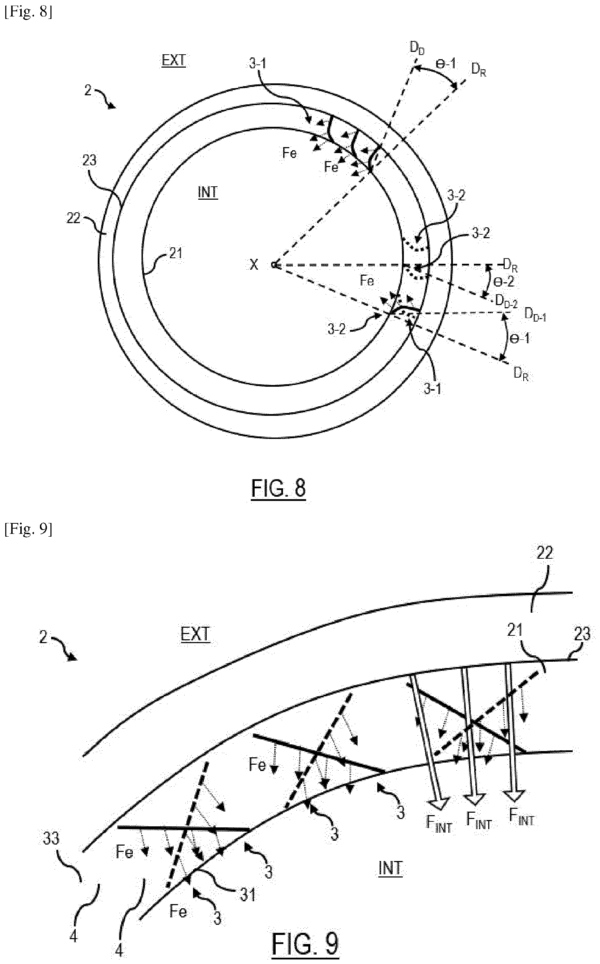

Dans une autre forme de réalisation de l'invention, en référence aux figures 8 et 9, la paroi intérieure 21 comporte une première pluralité de ligne de soufflage 3 et une deuxième pluralité de lignes de soufflage 3, chacune comportant des ouvertures traversantes. De manière préférée, chaque première ligne de soufflage 3 est écartée d'un premier angle d'inclinaison Θ-1 par rapport à l'axe X dans le plan de projection cylindrique P tandis que chaque deuxième ligne de soufflage 3 est écartée d'un deuxième angle d'inclinaison Θ-2 par rapport à l'axe X dans le plan de projection cylindrique P.

Dans cet exemple de réalisation, le premier angle d'inclinaison O-1 et le deuxième angle d'inclinaison Θ-2 possèdent des signes différents de manière fournir des dégivrages différents. L'utilisation de deux pluralités de lignes de soufflage 3 permet un dégivrage synergique entre les flux élémentaires Fe issus des différentes pluralités de lignes de soufflage 3. Il va de soi que la paroi intérieure 21 pourrait comporter plus de deux pluralités de lignes de soufflage 3.

En fonctionnement, la source d'air chaud 9 alimente les lignes de soufflage 3 qui permettent de chauffer par conduction la paroi intérieure 21 lorsque l'air chaud circule dans les canaux de conduction 51 de la structure alvéolaire 50 dont les lignes de soufflage 3 ont la forme. En outre, la source d'air chaud 9 alimente les ouvertures traversantes 4 des lignes de soufflage 3 qui permettent de chauffer par conduction. Comme ces dernières sont réparties à la périphérie de la paroi intérieure 21, le dégivrage est réalisé de manière homogène. L'inclinaison des lignes de soufflage 3 ainsi que l'écartement judicieux des lignes de soufflage 3 entre elles permet d'éviter que de nombreuses ouvertures traversantes 4 soient alignées selon l'axe X ce qui pénaliserait les performances de dégivrage. Ainsi, chaque ouverture traversante 4 émet un flux élémentaire Fe d'air chaud qui est guidé selon l'axe X par le flux d'air intérieur $F_{INT}$ du turboréacteur 1 afin de dégivrer, par convection et conduction, une portion de la paroi intérieure située en aval de l'ouverture traversante 4.

Contrairement à l'art antérieur qui enseignait un chauffage uniforme, seules quelques lignes de soufflage 3 locales permettent un dégivrage global. L'écartement des lignes de soufflage 3 est avantageux étant donné qu'il permet de rendre liquide tout givre accumuler sans permettre une retransformation en glace lors de sa circulation vers l'aval. Un tel rapport de distance permet de réduire la consommation d'air chaud pour le dégivrage.

**Revendications**

1. Entrée d'air (2) d'une nacelle de turboréacteur (1) d'aéronef comportant un dispositif de dégivrage et s'étendant selon un axe X dans lequel circule un flux d'air (F) d'amont vers l'aval, l'entrée d'air (2) s'étendant de manière annulaire autour de l'axe X et comportant une paroi intérieure (21) tournée vers l'axe X et une paroi extérieure (22) qui est opposée à la paroi intérieure (21), les parois (21, 22) étant reliées par un bord d'attaque (23) et une cloison interne avant (25) de manière à délimiter une cavité annulaire (24), le dispositif de dégivrage comportant au moins une source d'air chaud (9) dans la cavité annulaire (24), entrée d'air **caractérisée par le fait que** la paroi intérieure (21) comporte une pluralité de lignes de soufflage (3), chaque ligne de soufflage (3) comportant une pluralité d'ouvertures traversantes (4) configurées pour souffler des flux élémentaires (Fe) issus de la source d'air chaud (9) afin de dégivrer ladite paroi intérieure (21), les lignes de soufflage (3) étant parallèles entre elles dans un plan de projection cylindrique (P) défini par rapport à l'axe X du turboréacteur et à un axe (Y) définissant la position angulaire par rapport à l'axe X, chaque ligne de soufflage (3) ayant une profondeur P3 définie selon l'axe X et une longueur L3 définie selon l'axe (Y) dans le plan de projection cylindrique (P), deux lignes de soufflage (3) adjacentes étant écartées d'une distance D3 selon l'axe Y, chaque position selon l'axe (Y) comportant au plus une ouverture traversante (4), le rapport des distances L3/D3 étant compris dans l'intervalle [0,8 ; 1[.

2. Entrée d'air selon la revendication 1, dans laquelle chaque ligne de soufflage (3) étant écartée d'un angle d'inclinaison (O) par rapport à l'axe (X) dans le plan de projection cylindrique (P), l'angle d'inclinaison (O) est compris entre 20° et 70°.

3. Entrée d'air selon l'une des revendications 1 à 2, dans laquelle la paroi intérieure (21) comprend au moins une zone angulaire libre (ZL), formée entre deux lignes de soufflage adjacentes (3), qui est exempte d'ouvertures traversantes (4).

4. Entrée d'air selon l'une des revendications 1 à 3, dans laquelle chaque ligne de soufflage (3) comporte au moins une ouverture traversante (4) située la plus en amont, dite « ouverture primaire », configurée pour souffler des flux élémentaires (Fe) issus de la source d'air chaud (9) selon un cône de diffusion dont l'amplitude est plus importante qu'au moins une autre ouverture traversante (4) de la ligne de soufflage (3), de préférence, de chaque autre ouverture traversante (4).

5. Entrée d'air selon l'une des revendications 1 à 4, dans laquelle chaque ligne de soufflage (3) comporte au moins 5 ouvertures traversantes (4), de préférence, au moins 10 ouvertures traversantes (4).

6. Entrée d'air selon l'une des revendications 1 à 5, dans laquelle, les ouvertures traversantes (4) d'une même ligne de soufflage (3) étant écartées d'un premier pas Px selon l'axe (X), les ouvertures traversantes (4), à une même position longitudinale selon l'axe (X), sont écartées d'un deuxième pas Py selon l'axe (Y) selon la relation suivante : $Py = Px * \alpha$ avec $\alpha$ une constante supérieure à 2, de préférence, à 5, de préférence encore, à 10.

7. Entrée d'air selon l'une des revendications 1 à 6, dans laquelle la paroi intérieure (21) comportant au moins une structure d'atténuation acoustique comportant une pluralité d'orifices d'atténuation acoustique (5), les orifices d'atténuation acoustique (5) sont répartis sur la paroi intérieure (21) en dehors des lignes de soufflage (3).

8. Entrée d'air selon la revendication 7, dans laquelle la structure d'atténuation acoustique est alvéolaire (50) et définit, d'une part, des cellules acoustiques comportant chacune au moins un orifice d'atténuation acoustique (5) et, d'autre part, des canaux de circulation (51) formant les lignes de soufflage (3) comportant les ouvertures traversantes (4) de soufflage.

9. Entrée d'air selon l'une des revendications 1 à 8, dans laquelle chaque ouverture traversante (4) possède une section supérieure à 3mm$^2$.

10. Entrée d'air selon l'une des revendications 7 à 9, dans laquelle chaque orifice d'atténuation acoustique (5) possède un diamètre inférieur à 0,5mm.

11. Procédé de dégivrage d'une entrée d'air (2), selon l'une des revendications 1 à 10, d'une nacelle de turboréacteur (1) d'aéronef s'étendant selon un axe X dans lequel circule un flux d'air (F) d'amont vers l'aval, l'entrée d'air (2) s'étendant de manière annulaire autour de l'axe X et comportant une paroi intérieure (21) tournée vers l'axe X et une paroi extérieure (22) qui est opposée à la paroi intérieure (21), le procédé comportant une étape de soufflage d'une pluralité de flux élémentaires (Fe) issus de la source d'air chaud (9) par les ouvertures traversantes (4) des lignes de soufflage (3) de manière à dégivrer la paroi intérieure (21).

**Patentansprüche**

1. Lufteinlass (2) einer Turbotriebwerksgondel (1) eines Flugzeugs mit einer Enteisungsvorrichtung und sich gemäß einer Achse X erstreckend, in der ein Luftstrom (F) von stromaufwärts nach stromabwärts zirkuliert, wobei sich der Lufteinlass (2) ringförmig um die Achse X erstreckt und eine Innenwand (21) aufweist, die zur Achse X gerichtet ist, und eine Außenwand (22), die der Innenwand (21) gegenüberliegt, wobei die Wände (21, 22) durch eine Vorderkante (23) und eine vordere innere Trennwand (25) derart verbunden sind, dass ein ringförmiger Hohlraum (24) begrenzt wird, wobei die Enteisungsvorrichtung mindestens eine Warmluftquelle (9) in dem ringförmigen Hohlraum (24) aufweist, wobei der Lufteinlass **dadurch gekennzeichnet ist, dass** die Innenwand (21) eine Vielzahl von Blasleitungen (3) aufweist, wobei jede Blasleitung (3) eine Vielzahl von Durchgangsöffnungen (4) aufweist, die dazu ausgelegt sind, Elementarströme (Fe), die von der Warmluftquelle (9) ausgehen, zu blasen, um die Innenwand (21) zu enteisen, wobei die Blasleitungen (3) in einer zylindrischen Projektionsebene (P), die im Verhältnis zur Achse X des Turbotriebwerks und zu einer Achse (Y) festgelegt ist, die die Winkelposition im Verhältnis zur Achse X festlegt, parallel zueinander sind, wobei jede Blasleitung (3) eine Tiefe P3 hat, die gemäß der Achse X festgelegt ist, und eine Länge L3, die gemäß der Achse (Y) festgelegt ist, in der zylindrischen Projektionsebene (P), wobei zwei benachbarte Blasleitungen (3) in einem Abstand D3 gemäß der Achse Y beabstandet sind, wobei jede Position gemäß der Achse (Y) höchstens eine Durchgangsöffnung (4) aufweist, wobei das Verhältnis der Abstände L3/D3 in dem Intervall [0,8; 1[ liegt.

2. Lufteinlass nach Anspruch 1, wobei jede Blasleitung (3) in einem Neigungswinkel (O) im Verhältnis zur Achse (X) in der zylindrischen Projektionsebene (P) beabstandet ist, wobei der Neigungswinkel (O) zwischen 20° und 70° liegt.

3. Lufteinlass nach einem der Ansprüche 1 bis 2, wobei die Innenwand (21) mindestens einen freien Winkelbereich (ZL) umfasst, der zwischen zwei benachbarten Blasleitungen (3) gebildet ist, der ohne Durchgangsöffnungen (4) ist.

4. Lufteinlass nach einem der Ansprüche 1 bis 3, wobei jede Blasleitung (3) mindestens eine Durchgangsöffnung (4), bezeichnet als "primäre Öffnung", aufweist, die sich am weitesten stromaufwärts befindet, die dazu ausgelegt ist, von der Warmluftquelle (9) ausgehende Elementarströme (Fe) gemäß einem Diffusionskegel zu blasen, dessen Amplitude größer als mindestens eine andere Durchgangsöffnung (4) der Blasleitung (3), vorzugsweise jede andere Durchgangsöffnung (4), ist.

5. Lufteinlass nach einem der Ansprüche 1 bis 4, wobei jede Blasleitung (3) mindestens 5 Durchgangsöffnungen (4), vorzugsweise mindestens 10 Durchgangsöffnungen (4), aufweist.

6. Lufteinlass nach einem der Ansprüche 1 bis 5, wobei, wobei die Durchgangsöffnungen (4) derselben Blasleitung (3) in einem ersten Schritt Px gemäß der Achse (X) beabstandet sind, die Durchgangsöffnungen (4) auf derselben Längsposition gemäß der Achse (X) in einem zweiten Schritt Py gemäß der Achse (Y) gemäß der folgenden Gleichung Py = Px * $\alpha$ beabstandet sind, mit $\alpha$ als Konstante größer als 2, vorzugsweise als 5, bevorzugter als 10.

7. Lufteinlass nach einem der Ansprüche 1 bis 6, wobei die Innenwand (21) mindestens eine Schalldämpfungsstruktur aufweist, die eine Vielzahl von Schalldämpfungsöffnungen (5) aufweist, wobei die Schalldämpfungsöffnungen (5) auf der Innenwand (21) außerhalb der Blasleitungen (3) verteilt sind.

8. Lufteinlass nach Anspruch 7, wobei die Schalldämpfungsstruktur wabenförmig (50) ist und zum einen Schallzellen festlegt, die jeweils mindestens eine Schalldämpfungsöffnung (5) aufweisen und zum anderen Zirkulationskanäle (51), die die Blasleitungen (3) bilden, die die Blasdurchgangsöffnungen (4) aufweisen.

9. Lufteinlass nach einem der Ansprüche 1 bis 8, wobei jede Durchgangsöffnung (4) einen Querschnitt größer als 3 mm$^2$ besitzt.

10. Lufteinlass nach einem der Ansprüche 7 bis 9, wobei jede Schalldämpfungsöffnung (5) einen Durchmesser kleiner als 0,5 mm besitzt.

11. Verfahren zum Enteisen eines Lufteinlasses (2) nach einem der Ansprüche 1 bis 10 einer Turbotriebwerksgondel (1) eines Flugzeugs, der sich gemäß einer Achse X erstreckt, in der ein Luftstrom (F) von stromaufwärts nach stromabwärts zirkuliert, wobei sich der Lufteinlass (2) ringförmig um die Achse X erstreckt und einen Innenwand (21) aufweist, die zur Achse X gerichtet ist, und eine Außenwand (22), die der Innenwand (21) gegenüberliegt, wobei das Verfahren einen Blassschritt einer Vielzahl von Elementarströmen (Fe) ausgehend von der Warmluftquelle (9) durch die Durchgangsöffnungen (4) der Blasleitungen (3) derart aufweist, dass die Innenwand (21) enteist wird.

**Claims**

1. An air inlet (2) of an aircraft turbojet nacelle (1) comprising a de-icing device and extending along an axis X in which an air flow (F) circulates from upstream to downstream, the air inlet (2) extending annularly about the axis X and comprising an inner wall (21) facing the axis X and an outer wall (22) which is opposite to the inner wall (21), the walls (21, 22) being connected by a leading edge (23) and an inner front bulkhead (25) so as to delimit an annular cavity (24), the de-icing device comprising at least one hot air source (9) in the annular cavity (24), the air inlet being **characterised by** the inner wall (21) comprising a plurality of blowing lines (3), each blowing line (3) comprising a plurality of through-openings (4) configured to blow elementary flows (Fe) from the hot air source (9) in order to de-ice said inner wall (21), the blowing lines (3) being parallel to each other in a cylindrical projection plane (P) defined with respect to the axis X of the turbojet and to an axis (Y) defining the angular position with respect to the axis X, each blowing line (3) having a depth P3 defined along the axis X and a length L3 defined along the axis (Y) in the cylindrical projection plane (P), two adjacent blowing lines (3) being separated by a distance D3 along the axis Y, each position along the axis (Y) comprising at most one through-opening (4), the ratio of the distances L3/D3 being comprised in the interval [0.8; 1[.

2. The air inlet according to claim 1, wherein each blowing line (3) is separated by an inclination angle ($\Theta$) with respect to the axis (X) in the cylindrical projection plane (P), the inclination angle ($\Theta$) is between 20° and 70°.

3. The air inlet according to one of claims 1 to 2, wherein the inner wall (21) comprises at least one free angular zone (ZL), formed between two adjacent blowing lines (3), which is free of through-openings (4).

4. The air inlet according to one of claims 1 to 3, wherein each blowing line (3) comprises at least one through-opening (4) located furthest upstream, called "primary opening", configured to blow elementary flows (Fe) from the hot air source (9) along a propagation cone whose amplitude is greater than at least one other through-opening (4) of the blowing line (3), preferably, each other through-opening (4).

5. The air inlet according to one of claims 1 to 4, wherein each blowing line (3) comprises at least 5 through-openings (4), preferably at least 10 through-openings (4).

**6.** The air inlet according to one of claims 1 to 5, wherein, the through-openings (4) of a same blowing line (3) being separated by a first pitch Px along the axis (X), the through-openings (4), at a same longitudinal position along the axis (X), are separated by a second pitch Py along the axis (Y) according to the following relationship: Py = Px * $\alpha$ with $\alpha$ being a constant greater than 2, preferably 5, more preferably 10.

**7.** The air inlet according to one of claims 1 to 6, wherein the inner wall (21) comprising at least one sound attenuation structure comprising a plurality of sound attenuation holes (5), the sound attenuation holes (5) are distributed on the inner wall (21) apart from the blowing lines (3).

**8.** The air inlet according to claim 7, wherein the sound attenuation structure is honeycomb (50) and defines, on the one hand, acoustic cells each comprising at least one sound attenuation hole (5) and, on the other hand, circulation channels (51) forming the blowing lines (3) comprising the through-openings (4) for blowing.

**9.** The air inlet according to one of claims 1 to 8, wherein each through-opening (4) has a cross-section greater than 3 mm$^2$.

**10.** The air inlet according to one of claims 7 to 9, wherein each sound attenuation hole (5) has a diameter of less than 0.5 mm.

**11.** A method for de-icing an air inlet (2), according to one of claims 1 to 10, of an aircraft turbojet nacelle (1) extending along an axis X in which an air flow (F) circulates from upstream to downstream, the air inlet (2) extending annularly about the axis X and comprising an inner wall (21) facing the axis X and an outer wall (22) which is opposite to the inner wall (21), the method comprising a step of blowing a plurality of elementary flows (Fe) from the hot air source (9) through the through-openings (4) of the blowing lines (3) so as to de-ice the inner wall (21).

[Fig. 1]

FIG. 1

[Fig. 2]

EXT

2

22

24

25

23

21

INT

11

12

1

F

X

F_INT

4

Fe

F

24

9

25

F_EXT

FIG. 2

[Fig. 3]

FIG. 3

[Fig. 4]

FIG. 4

[Fig. 5]

FIG. 5

[Fig. 6A]

FIG. 6A

[Fig. 6B]

Pext

50

51

Pint / 21    5  5  5  5    4    5  5  5  5

FIG. 6B

[Fig. 7]

$D_N$    $D_S$

σ

X

$F_{INT}$

4    Fe

21

F

24    25    9

$F_{EXT}$

FIG. 7

[Fig. 8]

FIG. 8

[Fig. 9]

FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2912781
- WO 2015071609 A
- US 3933327 A
- US 5841079 A